# EUROPÄISCHE PATENTSCHRIFT

(11) **EP 4 019 813 B1**
(45) Veröffentlichungstag und Bekanntmachung des Hinweises auf die Patenterteilung: **15.11.2023**
(21) Anmeldenummer: 20217155.9
(22) Anmeldetag: 23.12.2020
(51) Int. Cl.: F16J 15/44, F16J 15/56, F04B 39/04, F16J 15/26, F04B 39/00

(54) **DROSSELANORDNUNG FÜR KOLBENKOMPRESSOREN**
THROTTLE ARRANGEMENT FOR PISTON COMPRESSORS
AGENCEMENT D'ÉTRANGLEMENT POUR COMPRESSEURS À PISTON

(43) Veröffentlichungstag der Anmeldung: 29.06.2022
(73) Patentinhaber: Burckhardt Compression AG, 8404 Winterthur (CH)
(72) Erfinder: Feistel, Norbert, 8548 Ellikon a.d. Thur (CH)
(74) Vertreter: Hepp Wenger Ryffel AG

(56) Entgegenhaltungen:
- CH-A- 439 897
- US-A- 1 799 335
- US-A- 3 469 855
- US-A- 4 289 322

## Beschreibung

Die vorliegende Erfindung betrifft eine Drosselanordnung für Kolbenkompressoren. Die vorliegende Erfindung betrifft weiter einen Kolbenkompressor umfassend eine solche Drosselanordnung sowie die Verwendung einer solchen Drosselanordnung in einem Kolbenkompressor.

Für die Verdichtung von Flüssigkeiten oder Gasen kommen standardmässig Kompressoren und insbesondere Kolbenkompressoren zum Einsatz. Um ein unerwünschtes bzw. unkontrolliertes Ausströmen des zu komprimierenden Mediums zu verhindern oder zumindest auf ein Minimum zu reduzieren, muss der Kompressionsraum dabei gegenüber seiner Umgebung möglichst gut abgedichtet werden. Der Bereich der Durchführung der Kolbenstange in den Zylinderinnenraum wird üblicherweise durch eine sogenannte Kolbenstangenpackung abgedichtet, welche mehrere in axialer Richtung der Kolbenstange hintereinander angeordnete Dichtelemente umfasst.

Drosselringe stellen Kolbenstangendichtelemente dar, welche zum Abbau dynamischer Druckspitzen am dem Kompressionsraum zugewandten Ende der Kolbenstangenpackung angeordnet werden. Die dynamische Druckkomponente, also der sich während einer Kurbelwellenumdrehung zwischen Null und einem Maximalwert ändernde Unterschied zwischen Verdichtungsdruck und Saugdruck, soll von den eigentlichen Dichtelementen ferngehalten werden, um sie vor Bruchversagen zu schützen.

Die aus dem Stand der Technik bekannten Drosselringe werden üblicherweise entweder als von Beginn an reibungsfreie Dichtelemente oder auch als reibungsfreie Dichtelemente mit einem geringen Einlaufverschleiss ausgeführt. Derartige Drosselringe sind beispielsweise aus dem Patent CH 439 897 bekannt.

Die gängigen, reibungsfrei arbeitenden Drosselringe weisen jedoch den Nachteil auf, dass sie nur sehr wenig zur Abdichtung der dynamischen Druckkomponente beitragen, was zu einem raschen Verschleiss der nachfolgend angeordneten, eigentlichen Dichtelemente führt. Zudem kommt es im Betrieb durch allfällige Berührungen des Drosselrings mit ihrem Gegenlaufpartner zu einer verschleissbedingten Vergrösserung des minimalen Spalts zwischen dem Drosselring und dem Gegenlaufpartner, wodurch die Dichtfunktion des Drosselrings weiter abnimmt und letztendlich verloren geht.

Ausgehend von dem genannten Stand der Technik liegt der vorliegenden Erfindung die Aufgabe zugrunde, solche und weitere Nachteile des Standes der Technik zumindest zu reduzieren und insbesondere eine Drosselanordnung der eingangs genannten Art anzugeben, welche im Vergleich zu den bekannten Drosselringbauformen eine verbesserte Dichtfunktion aufweist und eine längere Standzeit ermöglicht.

Die Aufgabe wird durch eine Drosselanordnung, einen Kolbenkompressor umfassend eine solche Drosselanordnung, sowie die Verwendung einer solchen Drosselanordnung in einem Kolbenkompressor, insbesondere zur Abdichtung der dynamischen Druckkomponente, aufweisend die Merkmale der unabhängigen Ansprüche gelöst. Vorteilhafte Ausgestaltungen und Weiterbildungen sind Gegenstand der abhängigen Ansprüche.

Die Aufgabe wird insbesondere durch eine Drosselanordnung zum Abdichten einer Gleitfläche eines in einer Axialrichtung beweglichen Körpers eines Kolbenkompressors gelöst, wobei die Drosselanordnung im Gebrauch eine kompressionsraumseitige Hochdruckseite sowie eine kurbeltriebseitige Niederdruckseite aufweist. Die erfindungsgemässe Drosselanordnung umfasst eine Mehrzahl von kreisringförmigen Dichtscheiben sowie eine Dichtscheibenhalterung. Die Dichtscheibenhalterung weist einen L-förmigen Radialschnitt auf, welcher durch einen in Axialrichtung verlaufenden ersten Schenkel sowie einen quer zur Axialrichtung verlaufenden zweiten Schenkel gebildet wird. Der zweite Schenkel ist dabei kreisringförmige ausgebildet und weist eine in Richtung der Hochdruckseite weisende Auflagefläche auf, auf der die Dichtscheiben in Axialrichtung aufeinander gestapelt angeordnet sind. Der erste Schenkel ist zylinderförmig ausgebildet und erstreckt sich entlang des Aussen- oder Innenumfangs des zweiten Schenkels von der Auflagefläche in Richtung der Hochdruckseite erstreckt. Dabei ist die axiale Höhe des ersten Schenkels derart gewählt, dass die auf der Auflagefläche gestapelt angeordneten Dichtscheiben im Gebrauch ein gewisses Axialspiel aufweisen. Demzufolge sind die Dichtscheiben in Axialrichtung nicht eingeklemmt und somit quer zur Axialrichtung bewegbar. Der erste Schenkel weist ferner eine Mehrzahl von Gasdurchlassöffnungen sowie eine in Richtung der Dichtscheiben weisende Begrenzungsfläche auf. Bei koaxialer Ausrichtung der Dichtscheiben mit dem ersten Schenkel und dem abzudichtenden Körper ist zwischen der Begrenzungsfläche und den Dichtscheiben jeweils ein erster Ringspalt gebildet, welcher durch die Gasdurchlassöffnungen fluidisch mit der Hochdruckseite verbunden ist. Zwischen der Gleitfläche des abzudichtenden Körpers und den Dichtscheiben ist jeweils ein zweiter Ringspalt gebildet, dessen verschleissbedingte Vergrösserung im Wesentlichen durch die radiale Breite des ersten Ringspalts begrenzt wird.

Die Dichtscheibenhalterung der erfindungsgemässen Drosselanordnung ist also ein Dichtscheibenmagazin, in welchem die Dichtscheiben mit ihren Sitzflächen in einer Art Reihenschaltung aufeinanderliegen und ein Dichtscheibenpaket bilden. Typischerweise beträgt die radiale Breite des zweiten Ringspalts im nicht-eingelaufenen Zustand der Drosselanordnung weniger als die radiale Breite des ersten Ringspalts. Somit wird während des Einlaufprozesses ein gewisser Verschleiss, welcher durch Berührungen der Dichtscheiben mit dem abzudichtenden Körper im laufenden Betrieb hervorgerufen wird, an den der Gleitfläche zugewandten Flächen der Dichtscheiben zugelassen, bevor die Dichtscheiben durch die Begrenzungsfläche an weiterem Verschleiss gehindert werden. Anders ausgedrückt stellt die Dichtscheibenhalterung sicher, dass sich die einzelnen Dichtscheiben im eingelaufenen Zustand nicht mehr als den durch den ersten Ringspalt vorgegebenen radialen Weg gegeneinander verschieben können, wodurch eine weitere Vergrösserung des zweiten Ringspalts verhindert oder zumindest deutlich reduziert wird. Die erfindungsgemässe Drosselanordnung ist insbesondere zur Abdichtung einer Kolbenstange oder eines Kolbens eines trockenlaufenden Kolbenkompressors geeignet und kann auch beim Komprimieren sehr leichter Gase wie Wasserstoff eingesetzt werden, wo Dichtelemente mit guter und über einen langen Zeitraum konstanter Dichtwirkung erforderlich sind.

Da sich die Dichtwirkung aus der unterschiedlichen Lage der Dichtscheiben zueinander ergibt, ist im Gegensatz zu den aus dem Stand der Technik bekannten Drosselringen Verschleiss an den einzelnen Scheiben in begrenztem Umfang möglich, ohne dass dies unmittelbar zu einer Verschlechterung der Dichtwirkung führt. Die Begrenzung des radialen Verschleisses ist jedoch zwingend notwendig, da sich bei einem zu grossen Verschleiss an den einzelnen Dichtscheiben vermehrt Anordnungen mit einem geraden Strömungspfad bilden können, welche keinen ausreichenden Strömungswiderstand aufweisen.

Aus diesem Grund beträgt die radiale Breite des ersten Ringspalts, und somit das im Wesentlichen höchstzugelassene Radialspiel der Dichtscheiben in der Dichtscheibenhalterung, in einer bevorzugten Ausführungsform der erfindungsgemässen Drosselanordnung jeweils nicht mehr als 1 mm.

Die Anzahl, Lage und die Geometrie der Gasdurchlassöffnungen der Dichtscheibenhalterung kann gemäss den jeweiligen Anforderungen variieren.

In einer bevorzugten Ausführungsform der erfindungsgemässen Drosselanordnung erstrecken sich die Gasdurchlassöffnungen über die gesamte axiale Höhe des ersten Schenkels der Dichtscheibenhalterung, wodurch sichergestellt wird, dass der Gasdruck der Hochdruckseite entlang der gesamten axialen Höhe des Dichtscheibenpaketes, d.h. an jeder Dichtscheibe in der Dichtscheibenhalterung, wirksam ist.

Alternativ oder zusätzlich dazu sind in der erfindungsgemässen Drosselanordnung die Gasdurchlassöffnungen in Umfangsrichtung des ersten Schenkels der Dichtscheibenhalterung gleichmässig verteilt angeordnet. Dadurch wird sichergestellt, dass der Gasdruck der Hochdruckseite entlang des gesamten Aussenumfangs der Dichtscheiben wirksam ist und es nicht zu einer ungleichmässigen Belastung der Dichtscheiben kommt.

In einer weiteren bevorzugten Ausführungsform der erfindungsgemässen Drosselanordnung beträgt das Verhältnis zwischen der Summe der Flächen der Gasdurchlassöffnungen und der Begrenzungsfläche, d.h. einschliesslich der Flächen der Gasdurchlassöffnungen, zwischen 1:2 und 1:4. Bevorzugt beträgt das Verhältnis zwischen der Summe der Flächen der Gasdurchlassöffnungen und der Begrenzungsfläche zwischen 1:2,8 und 1:3. Die angegebenen Wertebereiche stellen dabei besonders günstige Kompromisse zwischen der mechanischen Stabilität der Dichtringhalterung, insbesondere betreffend die Begrenzung des Radialspiels der Dichtscheiben in der Dichtscheibenhalterung, und der Wirksamkeit des Gasdrucks der Hochdruckseite auf die Dichtscheiben dar. Durch die optimale Begrenzung des Radialspiels der Dichtscheiben werden Berührungen der Dichtscheiben mit der sich bewegenden Kolbenstange im Gebrauch reduziert und der reibungsbedingte Verschleiss der Dichtscheiben minimiert.

In einer weiteren bevorzugten Ausführungsform der erfindungsgemässen Drosselanordnung weist der erste Schenkel der Dichtscheibenhalterung acht Gasdurchlassöffnungen auf. Die acht Gasdurchlassöffnungen erstrecken sich dabei bevorzugt über die gesamte axiale Höhe des ersten Schenkels und sind in Umfangsrichtung des ersten Schenkels gleichmässig verteilt angeordnet. Durch die sich dadurch ergebene Symmetrie wirken Druckkräfte besonders gleichmässig auf die Drosselanordnung ein, wodurch ihre Lebensdauer erhöht wird.

Die erfindungsgemässe Drosselanordnung kann abhängig von der Ausgestaltung des Kolbenkompressors, in welchem sie eingesetzt wird, trockenlaufend oder ölgeschmiert betrieben werden. Bei einem trockenlaufenden Drosselanordnung müssen zumindest die Dichtscheiben Trockenlaufeigenschaften aufweisen. Falls die Dichtscheibenhalterung während des Betriebes ebenfalls mit der Gleitfläche des abzudichtenden Körpers in Berührung kommt, so ist es bevorzugt, wenn zumindest der zweite Schenkel der Dichtscheibenhalterung Trockenlaufeigenschaften aufweist.

In einer weiteren bevorzugten Ausführungsform der erfindungsgemässen Drosselanordnung ist die Dichtscheibenhalterung einstückig, d.h. aus einem Teil bestehend, ausgebildet. Vorzugsweise ist die Dichtscheibenhalterung aus einem Werkstoff mit guten Notlaufeigenschaften im trockenlaufenden Betrieb der Drosselanordnung gefertigt. Eine solche Dichtscheibenhalterung weist eine besonders hohe Stabilität auf und ermöglicht eine besonders lange Standzeit der erfindungsgemässen Drosselanordnung.

Vorzugsweise ist die Dichtscheibenhalterung aus reinem oder gefülltem Hochtemperaturpolymer, reinem oder gefülltem Faserverbundmaterial oder bei sehr hohen Druckdifferenzen aus Metall, wie beispielsweise Bronze, gefertigt.

Als Hochtemperaturpolymer ist beispielsweise reines oder gefülltes Polyetheretherketon (PEEK), reines oder gefülltes Polyimid (PI), reines oder gefülltes Polyphenylensulfid (PPS), oder reines oder gefülltes Epoxid geeignet.

Als Faserverbundmaterial ist beispielsweise ein kohlenstofffaserverstärkter Kunststoff (KFK) geeignet. Ein KFK ist ein Verbundwerkstoff, bei dem Kohlenstofffasern in eine Kunststoff- Matrix, beispielsweise PEEK oder Epoxid, eingebettet sind. Der Matrix-Werkstoff dient zur Verbindung der Fasern sowie zum Füllen der Zwischenräume. Es sind auch andere Duroplaste oder auch Thermoplaste als Matrixwerkstoff geeignet.

Zur Verbesserung der physikalischen, mechanischen und/oder tribologischen Eigenschaften, insbesondere zum Verleih von Trockenlaufeigenschaften können den verwendeten Kunststoffen anorganische Füllstoffe, wie beispielsweise Kohle, Graphit, Glasfasern, MoS₂ und/oder Glasfasern beigegeben werden.

Als Metall sind insbesondere Bronzematerialien wie Aluminium-, Blei-, oder Zinnbronze sowie ein Material wie Messing geeignet.

Im Rahmen des Radialspiels der einzelnen Dichtscheiben können sich diese gegenüber der koaxialen Ausrichtung aller Dichtscheiben mit der Begrenzungsfläche innerhalb des Aufnahmeraums verschieben. Diese Verschiebung kann für jede Dichtscheibe unterschiedlich erfolgen, wobei die auf die Dichtscheiben einwirkende, dynamische Druckkomponente zu sich ändernden Spaltweiten zur Kolbenstange führt. Aus der Kombination aller Dichtscheiben resultiert also eine Art dynamische Labyrinthdichtung, welche den Strömungswiderstand erhöht und somit zu einer verbesserten Dichtwirkung der Drosselanordnung, insbesondere gegenüber der dynamischen Druckkomponente, führt.

Da sich der Strömungswiderstand aus der zufälligen, von der koaxialen Ausrichtung verschiedenen Ausrichtung der Dichtscheiben zueinander ergibt, sollte die Anzahl Dichtscheiben in der erfindungsgemässen Drosselanordnung wenigstens drei betragen. Bevorzugt beträgt die Anzahl an Dichtscheiben in der erfindungsgemässen Drosselanordnung genau fünf. Durch diese Dichtscheibenzahl wird eine besonders effiziente Strömungsumlenkung erreicht, wobei die axiale Höhe der Drosselanordnung gleichzeitig kompakt gehalten werden kann.

Durch die Reihenschaltung der Dichtscheiben in der erfindungsgemässen Drosselanordnung müssen die einzelnen Dichtscheiben nicht notwendigerweise eine maximal gute Dichtwirkung aufweisen, da die Dichtwirkung der Drosselanordnung wie vorhergehend beschrieben auf der Kombination mehrerer Dichtscheiben und die Erhöhung des Strömungswiderstandes durch die fortwährende Neuanordnung der Dichtscheiben in der Drosselanordnung beruht.

Es ist jedoch vorteilhaft, wenn die Dichtscheiben der erfindungsgemässen Drosselanordnung einstückig und endlos ausgebildet sind, da die Dichtscheiben dadurch besonders robust gegenüber der Belastung mit einer dynamischen Druckdifferenz hergestellt werden können.

In einer bevorzugten Ausführungsform der erfindungsgemässen Drosselanordnung weisen die Dichtscheiben eine axiale Höhe zwischen 1 mm und 5 mm auf. Bevorzugt beträgt die axiale Höhe der Dichtscheiben zwischen 2,4 mm und 2,6 mm, wodurch die Drosselanordnung in Axialrichtung besonders kompakt gebaut werden kann.

Innerhalb der Drosselanordnung baut sich der Druck von der Hochdruckseite in Richtung der Niederdruckseite, d.h. zwischen der in der Dichtscheibenhalterung zuoberst angeordneten Dichtscheibe in Richtung der auf der Grundfläche des Aufnahmeraums abgestützten Dichtscheibe, ab. Während der Druck im Dichtspalt, d.h. im zweiten Ringspalt, also in Richtung der Niederdruckseite abnimmt, bleibt der an der Aussenumfangsfläche der Dichtscheiben wirkende Druck, d.h. der Druck im ersten Ringspalt, konstant. An der Aussen- und der Innenumfangsfläche der zuoberst in der Drosselanordnung angeordneten Dichtscheibe liegt somit der gleiche Druck an, wohingegen zwischen der Aussen- und der Innenumfangsfläche der zuunterst in der Drosselanordnung angeordneten Dichtscheibe eine maximale Druckdifferenz herrscht. Die aus der anliegenden Druckdifferenz resultierende elastisch-plastische Verformung der Dichtscheiben in radialer Richtung führt bei der zuunterst angeordneten Dichtscheibe daher im Vergleich zu den übrigen Dichtscheiben zu einem geringeren Dichtspalt und damit zu einem höheren Verschleisspotential.

Um dieser unterschiedlichen Belastung der Dichtscheiben Rechnung zu tragen, sind die Dichtscheiben in einer bevorzugten Ausführungsform der erfindungsgemässen Drosselanordnung aus unterschiedlichen Materialien gefertigt. Der Elastizitätsmodul (oder auch E-Modul) ist ein Materialkennwert aus der Werkstofftechnik, der bei linear-elastischem Verhalten den proportionalen Zusammenhang zwischen Spannung und Dehnung bei der Verformung eines festen Körpers beschreibt. Der Elastizitätsmodul wächst dabei mit dem Widerstand, den ein Material seiner elastischen Verformung entgegensetzt. Die Bestimmung des Elastizitätsmoduls erfolgt üblicherweise an Materialproben von Kunststoffen in Zugversuchen, wobei Proben mit bekanntem Ausgangsquerschnitt in eine Zugprüfmaschine eingespannt und mit einer Zugkraft F belastet werden. Unter Erhöhung der Kraft wird diese dann über der verursachten Längenänderung ΔL grafisch dargestellt. Prüfmethoden für den Zugversuch sind beispielsweise in der EN ISO 527-1/-2 festgelegt.

Da die in der erfindungsgemässen Drosselanordnung zuunterst angeordnete Dichtscheibe die grösste Druckdifferenz erfährt, nimmt der Elastizitätsmodul des für die Dichtscheiben verwendeten Materials bevorzugt in Richtung der Niederdruckseite zu. Durch diese Massnahme lassen sich der Strömungswiderstand und die Standzeit der Drosselanordnung weiter erhöhen. Beispielsweise ist es erfindungsgemäss denkbar, dass für eine oder mehrere der zuoberst angeordneten Dichtscheiben ein relativ weiches Material, z.B. gefülltes PTFE, verwendet wird, gefolgt von einer oder mehreren Dichtscheiben aus einem Hochtemperaturpolymer, z.B. PEEK, PPS oder PI, im mittleren Bereich, und schliesslich einer oder mehreren Dichtscheiben aus einem Material mit hoher Festigkeit, z.B. einer Bronze oder Keramik, im unteren Bereich. Selbstverständlich ist auch der Einsatz von Mischungen verschiedener Polymere in einer einzelnen Dichtscheibe und/oder der Einsatz von Füllstoffen, beispielsweise zur Verbesserung der Trockenlaufeigenschaften, erfindungsgemäss denkbar.

Damit in dieser Kombination die steiferen Scheiben aufweisend einen höheren Elastizitätsmodul noch eine ausreichende elastisch-plastische Verformung erfahren, ist es erfindungsgemäss bevorzugt, wenn zumindest eine der Dichtscheiben, bevorzugt alle Dichtscheiben in der Dichtscheibenhalterung, eine von den übrigen Dichtscheiben verschiedene axiale Höhe aufweist.

In einer bevorzugten Ausführungsform der erfindungsgemässen Drosselanordnung nimmt die axiale Höhe der Dichtscheiben in Richtung der Niederdruckseite zu. Eine Vergrösserung der axialen Abmessung der Dichtscheiben führt zu einer Vergrösserung der Aussenumfangsfläche der jeweiligen Dichtscheiben und damit zu einer grösseren Wirksamkeit des Gasdrucks, wodurch eine verbesserte Dichtwirkung erzielt wird.

Die Aufgabe wird weiter mit einem Kolbenkompressor, insbesondere einem trockenlaufenden Kolbenkompressor, umfassend zumindest eine Drosselanordnung wie hierin beschrieben gelöst.

Die Aufgabe wird ferner durch die Verwendung einer Drosselanordnung wie hierin beschrieben zur Abdichtung einer Kolbenstange oder eines Kolbens, insbesondere gegenüber der dynamischen Druckdifferenz, gelöst.

Verschiedene Ausführungsformen der Erfindung werden nachfolgend anhand von Zeichnungen beschrieben, wobei gleiche oder entsprechende Elemente grundsätzlich mit gleichen Bezugszeichen versehen sind. Es zeigen:
- Fig. 1a: Eine Draufsicht auf eine erste Ausführungsform einer erfindungsgemässen Drosselanordnung;
- Fig. 1b: einen Längsschnitt durch die Drosselanordnung entlang der Linie B-B in Fig. 1a;
- Fig. 2a: eine Draufsicht auf die Dichtscheibenhalterung aus Fig. 1a;
- Fig. 2b: einen Längsschnitt durch die Dichtscheibenhalterung entlang der Linie B-B in Fig. 2a;
- Fig. 3a: eine Draufsicht auf eine Dichtscheibe aus Fig. 1a;
- Fig. 3b: einen Längsschnitt durch die Dichtscheibe entlang der Linie C-C in Fig. 3a;
- Fig. 4: einen Längsschnitt durch einen Kolbenkompressor zeigend eine Hälfte der erfindungsgemässen Drosselanordnung aus Fig. 1a mit einer Kolbenstange;
- Fig. 5: einen Längsschnitt durch eine Kolbenstangenpackung eines Kolbenkompressors umfassend eine erfindungsgemässe Drosselanordnung;
- Fig. 6a: eine Draufsicht auf eine zweite Ausführungsform einer Erfindungsgemässen Drosselanordnung;
- Fig. 6b: einen Längsschnitt durch die Drosselanordnung entlang der Linie C-C in Fig. 6a;
- Fig. 7: einen Längsschnitt durch einen Kolbenkompressor zeigend eine Hälfte der erfindungsgemässen Drosselanordnung aus Fig. 6a mit einer Zylinderlauffläche;
- Fig. 8: eine Seitenansicht eines Kolbens mit einer Mehrzahl von erfindungsgemässen Drosselanordnungen.

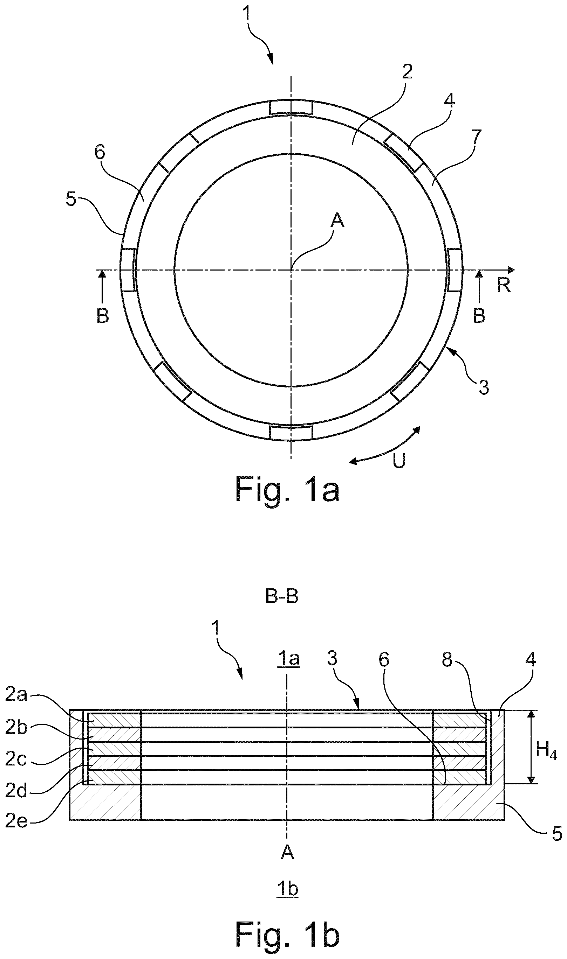

Figur 1a zeigt eine Draufsicht auf eine erste Ausführungsform einer erfindungsgemässen Drosselanordnung 1 umfassend eine Dichtscheibenhalterung 3 und eine Mehrzahl von Dichtscheiben 2, wobei entsprechend der gezeigten Draufsicht in dieser Darstellung lediglich die in Axialrichtung A zuoberst angeordnete Dichtscheibe sichtbar ist. Die Dichtscheibenhalterung 3 weist in Radialrichtung R einen L-förmigen Radialschnitt auf, wie nachfolgend in Figur 1b zu sehen ist, mit einem in Axialrichtung A verlaufenden ersten Schenkel 4 sowie einem quer zur Axialrichtung A verlaufenden zweiten Schenkel 5. Der zweite Schenkel 5 ist kreisringförmig ausgebildet und weist eine Auflagefläche 6 auf, auf welcher die Dichtscheiben 2 in Axialrichtung A aufeinander gestapelt angeordnet sind. Der erste Schenkel 4 ist zylinderförmig ausgebildet und erstreckt sich in Umfangsrichtung U entlang des Aussenumfangs des zweiten Schenkels 5 von der Auflagefläche 6 in Richtung der Dichtscheiben 2. Der erste Schenkel weist an seiner den Dichtscheiben 2 zugewandten Seite ferner eine Begrenzungsfläche 8 auf, welche in Umfangsrichtung U durch acht gleichmässig verteilt angeordnete Gasdurchlassöffnungen 7 unterbrochen ist.

Figur 1b zeigt einen Längsschnitt durch die in Figur 1a dargestellte Drosselanordnung 1 entlang der Schnittlinie B-B in Figur 1a. Zu sehen sind insgesamt fünf Dichtscheiben 2a-e, welche in Axialrichtung A aufeinander gestapelt angeordnet sind. Die Dichtscheiben 2 sind von der Hochdruckseite 1a her in die Dichtscheibenhalterung 3 einführbar, wobei die zuunterst in der Dichtscheibenhalterung 3 angeordnete Dichtscheibe 2e mit ihrer in Richtung der Niederdruckseite 1b weisenden Flanke auf der Auflagefläche 6 der Dichtscheibenhalterung 3 aufliegt. Bezogen auf den ersten Schenkel 4 weist der zweite Schenkel 5 in dieser Ausführungsform radial nach Innen. Der zylinderförmige erste Schenkel 4 erstreckt sich folglich entlang des Aussenumfangs des zweiten Schenkels 5, und zwar von der Auflagefläche 6 über etwas mehr als die gesamte axiale Höhe der gestapelt angeordneten Dichtscheiben 2a-e in Richtung der Hochdruckseite 1a. Der erste Schenkel 4 und die Begrenzungsfläche 8 weisen in diesem Ausführungsbeispiel eine axiale Höhe H₄ von 13 mm auf, wobei die axiale Höhe der Dichtscheiben 2a-e jeweils 2,5 mm beträgt. Aus der Differenz zwischen der axialen Höhe des ersten Schenkels H₄ und der Summe der axialen Höhen der gestapelt angeordneten Dichtscheiben 2a-e ergibt sich im gezeigten Ausführungsbeispiel ein Axialspiel der Dichtscheiben 2 in der Dichtscheibenhalterung 3 von 0,5 mm, welches sicherstellt, dass die Dichtscheiben 2 im Gebrauch in Radialrichtung bewegbar sind, wie nachfolgend noch näher erläutert wird.

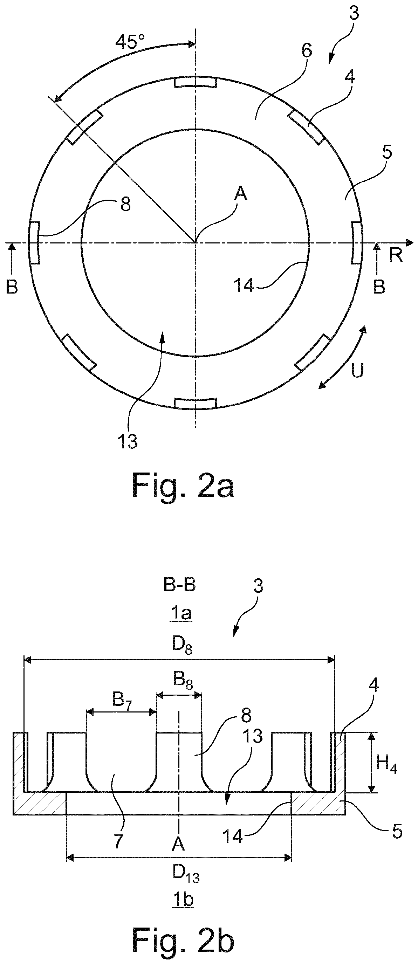

Figur 2a zeigt eine Draufsicht auf die Dichtscheibenhalterung 3 der in Figur 1a dargestellten Drosselanordnung 1. Die Dichtscheibenhalterung 3 umfasst einen kreisringförmigen zweiten Schenkel 5 mit einer Auflagefläche 6, welche eine in Axialrichtung A verlaufende, zentralen Durchgangsöffnung 13 zur Aufnahme einer Kolbenstange (nicht gezeigt) aufweist, wobei die Durchgangsöffnung 13 durch die Innenumfangsfläche 14 des zweiten Schenkels 5 definiert wird. Die Dichtscheibenhalterung 3 umfasst ferner einen entlang des Aussenumfangs des zweiten Schenkels 5 verlaufenden ersten Schenkel 4 mit einer in Radialrichtung R nach Innen weisenden Begrenzungsfläche 8, welcher einen Aufnahmeraum für Dichtscheiben (nicht gezeigt) definiert. Der erste Schenkel 4 ist durch acht in Umfangsrichtung U gleichmässig verteilt angeordnete Gasdurchlassöffnungen 7 unterbrochen. Die Begrenzungsfläche 8 wird dadurch in acht Begrenzungsflächensegmente 8 unterteilt, wobei der Mittelpunktswinkel zwischen den Zentren zweier benachbarter Begrenzungsflächensegmente 8 jeweils 45° beträgt.

Figur 2b zeigt einen Längsschnitt durch die in Figur 2a dargestellte Dichtscheibenhalterung 3 entlang der Schnittlinie B-B in Figur 2a. In dem gezeigten Ausführungsbeispiel beträgt der Innendurchmesser D₁₃ der durch die Innenumfangsfläche 14 definierten zentralen Durchgangsöffnung 13 des zweiten Schenkels 5 50 mm. Der lichte Durchmesser des durch die Begrenzungsflächensegmente 8 definierten Aufnahmeraums D₈ beträgt 69 mm. Der erste Schenkel 4 weist eine axiale Höhe H₄ von 13 mm auf und ist in Umfangsrichtung durch acht Gasdurchlassöffnungen 7 unterbrochen, welche sich jeweils über die gesamte axiale Höhe H₄ des ersten Schenkels erstrecken und eine Kreisbogenlänge B₇ von rund 19 mm aufweisen. Die Kreisbogenlänge der somit erhaltenen, einzelnen Begrenzungsflächensegmente B₈ beträgt rund 10 mm. Die angegebenen Kreisbogenlängen sind gemessen entlang der zur Hochdruckseite 1a zugewandten Seite der Begrenzungsfläche 8.

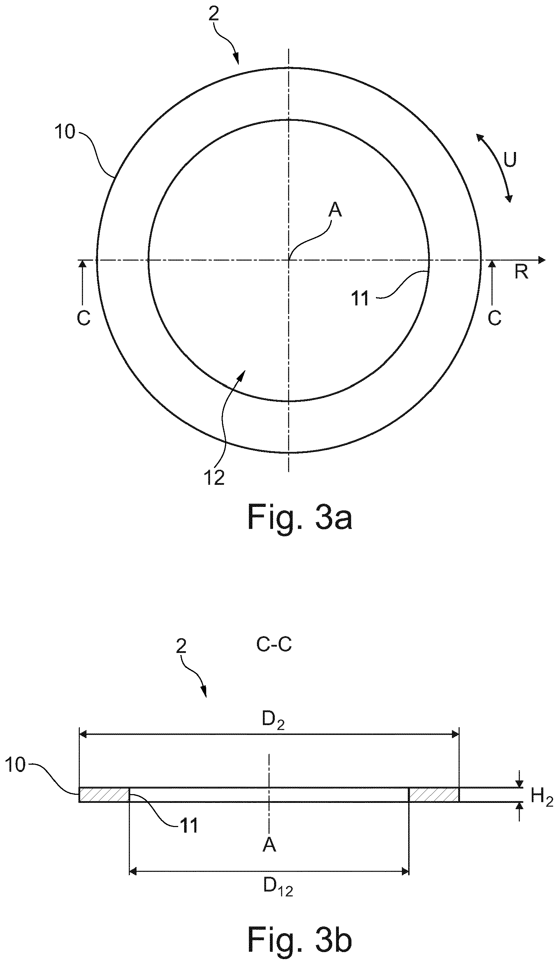

Figur 3a zeigt eine Draufsicht auf eine Dichtscheibe 2 aus der in Figur 1a dargestellten Drosselanordnung 1. Die Dichtscheibe 2 ist einstückig und in Umfangsrichtung U endlos ausgebildet und weist in Axialrichtung A eine zentrale Durchgangsöffnung 12 zur Aufnahme einer Kolbenstange (nicht gezeigt) auf. Wie nachfolgend für eine zweite Ausführungsform der erfindungsgemässen Drosselanordnung beschrieben werden wird, kann die zentrale Durchgangsöffnung 12 der kreisringförmigen Dichtscheiben 2 alternativ jedoch auch zur Aufnahme des zylinderförmigen ersten Schenkels der Dichtscheibenhalterung dienen. Die Dichtscheibe 2 besitzt eine in Radialrichtung R nach Aussen weisende Aussenumfangsfläche 10 sowie eine radial nach Innen weisende Innenumfangsfläche 11, wobei die Innenumfangsfläche 11 die zentrale Durchgangsöffnung 12 der Dichtscheibe 2 quer zur Axialrichtung A begrenzt.

Figur 3b zeigt einen Längsschnitt durch die in Figur 3a gezeigte Dichtscheibe 2 entlang der Schnittlinie C-C in Figur 3a. Die Dichtscheibe 2 weist eine axiale Höhe H₂ von 2,5 mm sowie bezogen auf die Aussenumfangsfläche 10 der Dichtscheibe 2 einen Aussendurchmesser D₂ von 68 mm auf. Der lichte Durchmesser der durch die Innenumfangsfläche 11 begrenzten zentralen Durchgangsöffnung 12, D₁₂, beträgt 50 mm.

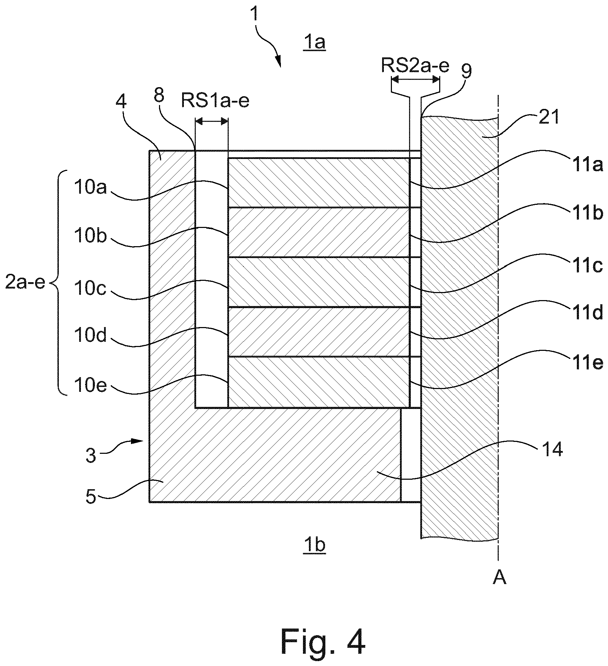

Figur 4 zeigt einen Längsschnitt durch die erfindungsgemässe Drosselanordnung 1 aus Figur 1a, wobei in dieser Darstellung lediglich eine Hälfte der Drosselanordnung 1 sowie eine Hälfte einer Kolbenstange 21 sichtbar sind. Die einzelnen Dichtscheiben 2a-e, der erste zylinderförmige erste Schenkel 4 und der abzudichtende Körper, d.h. in diesem Ausführungsbeispiel der Kolbenstange 21, sind in der gezeigten Darstellung koaxial zueinander ausgerichtet, sodass zwischen der Begrenzungsfläche 8 und den Aussenumfangsflächen 10a-e der Dichtscheiben 2a-e jeweils ein erster Ringspalt RS1a-e ausgebildet wird, welcher durch Gasdurchlassöffnungen (nicht gezeigt) fluidisch mit der Hochdruckseite 1a verbunden ist. Darüber hinaus wird zwischen der Gleitfläche 9 der Kolbenstange 21 und den Innenumfangsflächen 11a-e der Dichtscheiben 2a-e jeweils ein zweiter Ringspalt RS2a-e gebildet, dessen radiale Breite im gezeigten Ausführungsbeispiel mit 0,1 mm etwa ein Fünftel der radialen Breite des ersten Ringspalts beträgt. Im Neuzustand, das heisst bevor die Dichtscheiben 2a-e während einer gewissen Dauer eingefahren werden, sind die Dichtscheiben 2a-e derart ausgestaltet, dass ihre Innenumfangsflächen 11a-e in radialer Richtung über die Innenumfangsfläche 14 der zentralen Durchgangsöffnung des zweiten Schenkels 5 hervorstehen, wie dies in Figur 4 dargestellt ist. Im in Figur 4 dargestellten Ausführungsbeispiel ist der Innendurchmesser der Dichtscheiben nur wenige Hundertstel Millimeter oder wenige Zehntel Millimeter grösser als der Durchmesser der Kolbenstange 21. Berührungen der Dichtscheiben 2a-e mit der sich bewegenden Kolbenstange 21 im Betrieb haben zur Folge, dass die Innenumfangsflächen 11a-e während einer Einlaufphase an der Gleitfläche 9 anstehen, und dabei Material von den jeweiligen Innenumfangsflächen 11a-e der anstehenden Dichtscheiben 2a-e abgetragen wird. Der Innendurchmesser der Dichtscheiben 2a-e und somit auch der zweite Ringspalt RS2 wächst somit sukzessive auf einen Durchmesser an, welcher im Wesentlichen dem ersten Ringspalt RS 1 entspricht, bevor ein weiterer Verschleiss der Dichtscheiben 2a-e durch die Begrenzung des Radialspiels durch die Begrenzungsfläche 8 verhindert wird. Im erfindungsgemässen Gebrauch der Drosselanordnung 1 wird also zunächst ein geringer Verschleiss an den Innenumfangsflächen 11a-e der Dichtscheiben 2a-e zugelassen, bevor die Dichtscheiben 2a-e durch den ersten Ringspalt RS1a-e an weiterem Verschleiss gehindert werden.

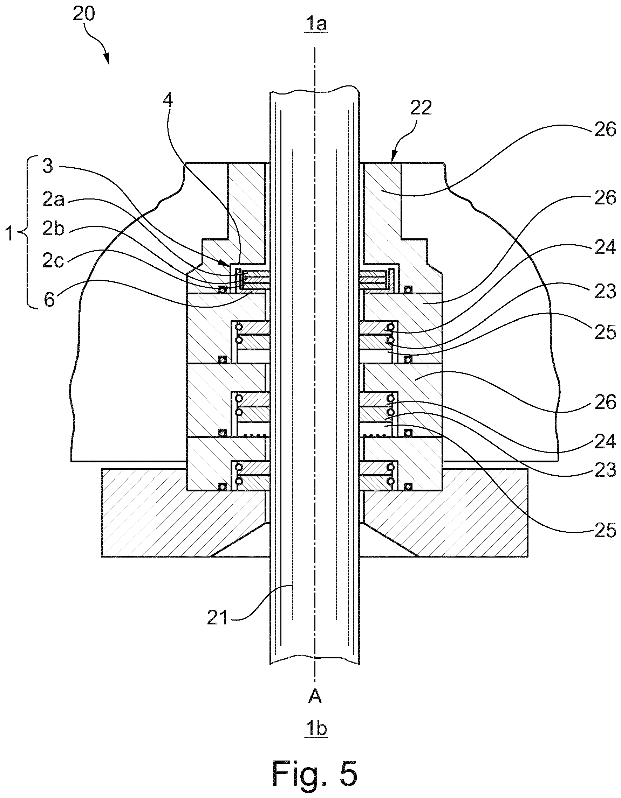

Figur 5 zeigt einen Längsschnitt durch eine Kolbenstangenpackung 22 eines trockenlaufenden Kolbenkompressors 20 mit einer erfindungsgemässen Drosselanordnung 1. Der Kolbenkompressor weist eine Kolbenstange 21 auf, welche in Axialrichtung A längsbeweglich gelagert ist, wobei sich im eingebauten Zustand bzw. im Gebrauch der Drosselanordnung 1 auf der Hochdruckseite 1a der Zylinder und auf der Niederdruckseite 1b der Kolbenstangenantrieb befindet. Die Kolbenstangenpackung 22 umfasst eine Mehrzahl hintereinander angeordneter Kammerringe 26 mit darin angeordneten Dichtringen 23. Bei der in Figur 5 dargestellten Ausführungsform sind die Dichtringe 23 jeweils zwischen einem Deckring 24 und einem Stützring 25 angeordnet. Zwischen zwei benachbarten Kammerringen 26 befindet sich also jeweils ein sogenannter Sandwichring umfassend in Verlaufsrichtung der Kolbenstange 21 einen Deckring 24, einen Dichtring 23 sowie einen Stützring 25. Das Vorhandensein von Stütz- und Deckringen ist, wie mit dem zuunterst in der Kolbenstangenpackung 22 angeordneten Dichtelement dargestellt, allerdings nicht zwingend erforderlich. Die Drosselanordnung 1 ist am hochdruckseitigen Eingang der Kolbenstangenpackung 22 angeordnet und umfasst im dargestellten Ausführungsbeispiel drei Dichtscheiben 2a-c, welche in Axialrichtung A in der Dichtscheibenhalterung 3 aufeinander gestapelt angeordnet sind. Die axiale Höhe der Drosselanordnung 1 ist dabei etwas kleiner als die Breite der Nut, welche durch die zwei benachbarten, die Drosselanordnung 1 aufnehmenden Kammerringe 26 ausgebildet wird. Die Drosselanordnung 1 ist also mit Axialspiel zwischen diesen Kammerringen 26 eingesetzt. Aufgrund dessen, dass sich der erste Schenkel 4 der Dichtscheibenhalterung etwas über die zuoberst in der Dichtscheibenhalterung angeordnete Dichtscheibe 2a erstreckt, werden die Dichtscheiben 2a-c nicht zwischen der Auflagefläche 6 und dem hochdruckseitig an die Drosselanordnung angrenzenden Kammerring 26 eingeklemmt. Daher weisen die Dichtscheiben 2a-c im Gebrauch ein Axialspiel auf, wodurch die radiale Bewegung der Dichtscheiben 2a-c im Gebrauch ermöglicht wird.

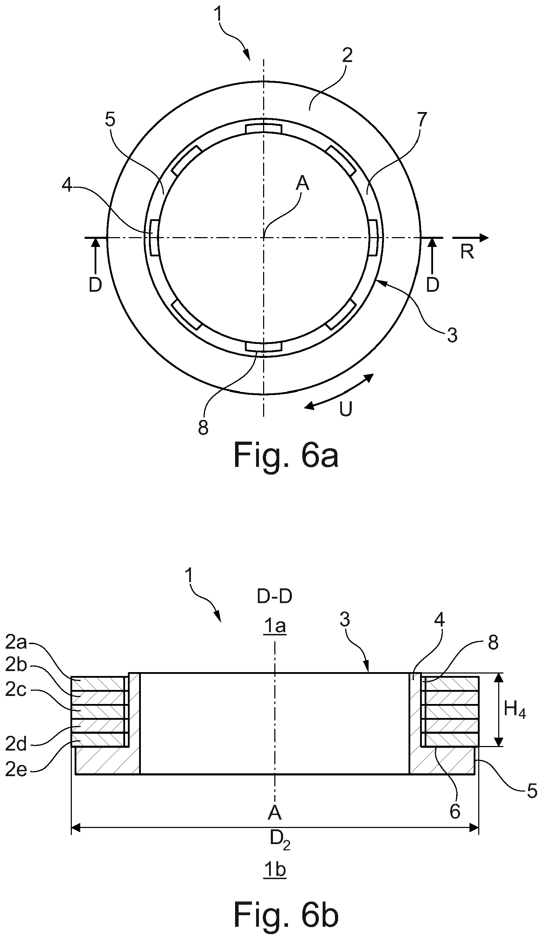

Figur 6a zeigt eine Draufsicht auf eine zweite Ausführungsform einer erfindungsgemässen Drosselanordnung 1 umfassend eine Dichtscheibenhalterung 3 und eine Mehrzahl von Dichtscheiben 2, wobei entsprechend der gezeigten Draufsicht in dieser Darstellung lediglich die in Axialrichtung A zuoberst angeordnete Dichtscheibe 2 sichtbar ist. Die Dichtscheibenhalterung 3 weist in Radialrichtung R einen L-förmigen Radialschnitt auf, wie nachfolgend in Figur 6b zu sehen ist, mit einem in Axialrichtung A verlaufenden ersten Schenkel 4 sowie einem quer zur Axialrichtung A verlaufenden zweiten Schenkel 5. Der zweite Schenkel 5 ist kreisringförmig ausgebildet und weist eine Auflagefläche 6 auf, auf welcher die Dichtscheiben 2 in Axialrichtung A aufeinander gestapelt angeordnet sind. Der erste Schenkel 4 ist zylinderförmig ausgebildet und erstreckt sich in Umfangsrichtung U entlang des Innenumfangs des zweiten Schenkels 5 von der Auflagefläche 6 in Richtung der Dichtscheiben 2. Der erste Schenkel 4 weist an seiner den Dichtscheiben 2 zugewandten Seite ferner eine in Umfangsrichtung U eine zylindermantelförmige Begrenzungsfläche 8 auf, welche in Umfangsrichtung U durch acht gleichmässig verteilt angeordnete Gasdurchlassöffnungen 7 unterbrochen ist.

Figur 6b zeigt einen Längsschnitt durch die in Figur 6a dargestellte Drosselanordnung 1 entlang der Schnittlinie D-D in Figur 6a. Zu sehen sind insgesamt fünf Dichtscheiben 2a-e, welche in Axialrichtung A aufeinander gestapelt angeordnet sind. Die Dichtscheiben 2 sind von der Hochdruckseite 1a her in die Dichtscheibenhalterung 3 einführbar, wobei die zuunterst in der Dichtscheibenhalterung 3 angeordnete Dichtscheibe 2e mit ihrer in Richtung der Niederdruckseite 1b weisenden Flanke auf der Auflagefläche 6 des zweiten Schenkels 5 aufliegt. In der dargestellten Ausführungsform weist der zweite Schenkel 5 bezogen auf den ersten Schenkel 4 radial nach Aussen. Der zylinderförmige erste Schenkel 4 erstreckt sich folglich entlang des Innenumfangs des zweiten Schenkels 5, und zwar von der Auflagefläche 6 über etwas mehr als die gesamte axiale Höhe der gestapelt angeordneten Dichtscheiben 2a-e in Richtung der Hochdruckseite 1a. Der erste Schenkel 4 weist eine axiale Höhe H₄ von 13 mm auf, wobei die axiale Höhe der Dichtscheiben 2 jeweils 2,5 mm beträgt (nicht gezeigt). Aus der Differenz zwischen der axialen Höhe des ersten Schenkels H₄ und der Summe der axialen Höhen der gestapelt angeordneten Dichtscheiben 2a-e ergibt sich im gezeigten Ausführungsbeispiel ein Axialspiel der Dichtscheiben 2 in der Dichtscheibenhalterung 3 von 0,5 mm, welches sicherstellt, dass die Dichtscheiben 2 im Gebrauch in Radialrichtung bewegbar sind.

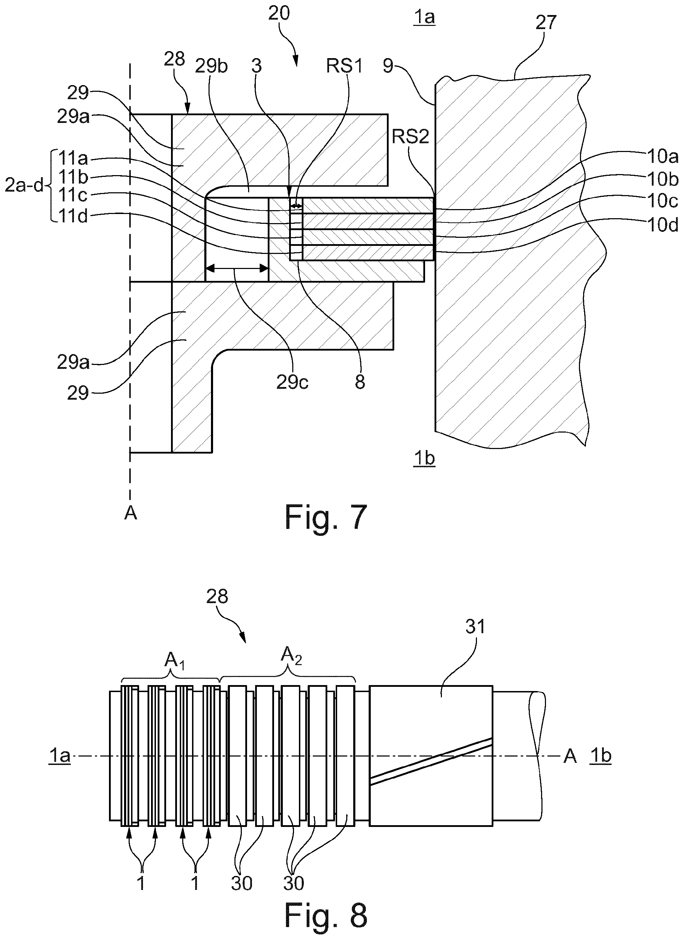

Figur 7 zeigt einen Längsschnitt durch einen Kolbenkompressor umfassend einen Zylinder 27, einen Kolben 28 sowie zumindest eine im Kolben 28 angeordnete Drosselanordnung 1 wie vorgehend in den Figuren 6a und 6b beschrieben. Der Kolben 28 ist als ein gebauter Kolben ausgestaltet, und umfasst eine Mehrzahl von in Axialrichtung A nacheinander angeordneten Kolbenkörpern 29, wobei jeder Kolbenkörper 29 eine Kammerscheibe 29a aufweist, welche einen Innenraum 29b ausbildet. Im Innenraum 29b ist eine Drosselanordnung 1 angeordnet. In Figur 7 ist der Verdichtungsraum 1a des Kolbenkompressors 20 oben angeordnet, und der Kurbelkasten, bzw. der Niederdruckteil 1b unten angeordnet. Die Drosselanordnung 1 umfasst einen Dichtscheibenträger 3 sowie vier kreisringförmige Dichtscheiben 2a-d, welche jeweils mit ihren radial nach Innen weisenden Umfangsflächen 1 1a-d und der Begrenzungsfläche 8 der Dichtscheibenhalterung 3 einen ersten Ringspalt RS1 bilden. Die Dichtscheibenhalterung 3 ist quer zur Axialrichtung A unter Ausbildung eines Innenspaltes 29c bezüglich der Kammerscheibe 29a beabstandet. Im gezeigten Ausführungsbeispiel beträgt die axiale Höhe des ersten Schenkels H₄ etwas weniger als die axiale Höhe des Innenraums 29b, wodurch der Innenspalt 29c Fluid leitend mit einem in der dargestellten Ansicht weiter oben und nicht sichtbaren hochdruckseitigen Raum 1a verbunden ist. Durch die Gasdurchlassöffnungen 7 im ersten Schenkel 4 (in der gezeigten Ansicht nicht sichtbar) ist folglich auch der erste Ringspalt RS1 fluidisch mit der Hochdruckseite 1a verbunden. In Folge von Berührungen der Dichtscheiben 2a-d mit der Zylinderlauffläche 9 des Zylinders 27 im Betrieb des Kolbenkompressors 20 wird Material von den Aussenumfangsflächen 10a-d der Dichtscheiben 2a-d abgetragen, wodurch der Aussendurchmesser der Dichtscheiben 2a-d und somit auch der zwischen den Aussenumfangsflächen 10a-d und der Gleitfläche 9 bestehende zweite Ringspalt RS2 sukzessive wächst. Sobald der zweite Ringspalt RS2 auf einen Durchmesser angewachsen ist, welcher im Wesentlichen dem ersten Ringspalt RS 1 entspricht, wird ein weiterer Verschleiss der Dichtscheiben 2a-d aufgrund der Begrenzung ihres Radialspiels durch die Begrenzungsfläche 8 verhindert. In der in Figur 7 dargestellten Ausführungsform der erfindungsgemässen Drosselanordnung 1 wird also zunächst ein geringer Verschleiss an den Aussenumfangsflächen 10a-d der Dichtscheiben 2a-d zugelassen, bevor die Dichtscheiben 2a-d durch den ersten Ringspalt RS1a-d an weiterem Verschleiss gehindert werden.

Figur 8 zeigt in einer Seitenansicht ein Ausführungsbeispiel eines Kolbens 28, der ausgehend von der Hochdruckseite 1a vier erfindungsgemässe Drosselanordnungen 1 aufweist, welche in Axialrichtung A im Bereich A1 des Kolbens 28 gegenseitig beabstandet angeordnet sind. Der Kolben 28 umfasst in Axialrichtung A nachfolgend fünf weitere Dichtelemente 30 im Bereich A2. Zudem ist niederdruckseitig 1b noch ein Führungsring 31 angeordnet.

### Bezugszeichenliste

- 1: Drosselanordnung
- 1a: Hochdruckseite
- 1b: Niederdruckseite
- 2: Dichtscheibe
- 3: Dichtscheibenhalterung
- 4: Erster Schenkel 5 Zweiter Schenkel6 Auflagefläche
- 7: Gasdurchlassöffnung
- 8: Begrenzungsfläche
- 9: Gleitfläche des abzudichtenden Körpers
- 10: Aussenumfangsfläche der Dichtscheibe
- 11: Innenumfangsfläche der Dichtscheibe
- 12: Zentrale Durchgangsöffnung der Dichtscheibe
- 13: Zentrale Durchgangsöffnung der Auflagefläche 6
- 14: Innenumfangsfläche der zentralen Durchgangsöffnung 13
- 20: Kolbenkompressor
- 21: Kolbenstange
- 22: Kolbenstangenpackung
- 23: Dichtring
- 24: Deckring
- 25: Stützring
- 26: Kammerring
- 27: Zylinder
- 28: Kolben
- 29: Kolbenkörper
- 29a: Kammerscheibe
- 29b: Innenraum
- 29c: Innenspalt
- 30: Dichtelement
- 31: Führungsring
- A: Axialrichtung
- B₇: Kreisbogenlänge einer Gasdurchlassöffnung
- B₈: Kreisbogenlänge eines Begrenzungsflächensegments
- D₂: Aussendurchmesser einer Dichtscheibe
- D₁₂: Innendurchmesser einer Dichtscheibe
- D₈: Innendurchmesser des Aufnahmeraums
- D₁₃: Innendurchmesser der zentralen Durchgangsöffnung 13
- H₂: Axiale Höhe einer Dichtscheibe
- H₄: Axiale Höhe des ersten Schenkels
- R: Radialrichtung
- RS1: Erster Ringspalt
- RS2: Zweiter Ringspalt
- U: Umfangsrichtung

## Patentansprüche

1. Drosselanordnung (1) zum Abdichten einer Gleitfläche (9) eines in einer Axialrichtung (A) beweglichen Körpers, insbesondere einer Kolbenstange (21) oder eines Kolbens (28), eines Kolbenkompressors (20), wobei die Drosselanordnung (1) im Gebrauch eine kompressionsraumseitige Hochdruckseite (1a) sowie eine kurbeltriebseitige Niederdruckseite (1b) aufweist, die Drosselanordnung (1) umfassend eine Mehrzahl von kreisringförmigen Dichtscheiben (2) sowie eine Dichtscheibenhalterung (3), wobei die Dichtscheibenhalterung (3) einen L-förmigen Radialschnitt aufweist, mit einem in Axialrichtung (A) verlaufenden ersten Schenkel (4) sowie einem quer zur Axialrichtung (A) verlaufenden zweiten Schenkel (5), welche Schenkel (4, 5) zusammen den L-förmigen Radialschnitt bilden, wobei der zweite Schenkel (5) kreisringförmig ausgebildet ist und eine in Richtung der Hochdruckseite (1a) weisende Auflagefläche (6) aufweist, auf welcher Auflagefläche (6) die Dichtscheiben (2) in Axialrichtung (A) aufeinander gestapelt angeordnet sind, wobei der erste Schenkel (4) zylinderförmig ausgebildet ist und sich entlang des Aussen- oder Innenumfangs des zweiten Schenkels (5) von der Auflagefläche (6) in Richtung der Hochdruckseite (1a) erstreckt, wobei die axiale Höhe des ersten Schenkels (H₄) derart gewählt ist, dass die auf der Auflagefläche (6) gestapelt angeordneten Dichtscheiben (2) im Gebrauch Axialspiel aufweisen, wobei der erste Schenkel (4) eine Mehrzahl von Gasdurchlassöffnungen (7) aufweist, wobei der erste Schenkel (4) eine in Richtung der Dichtscheiben (2) weisende Begrenzungsfläche (8) aufweist, wobei bei koaxialer Ausrichtung der Dichtscheiben (2) mit dem ersten Schenkel (4) und dem abzudichtenden Körper zwischen der Begrenzungsfläche (8) und den Dichtscheiben (2) jeweils ein erster Ringspalt (RS1) gebildet ist, welcher durch die Gasdurchlassöffnungen (7) fluidisch mit der Hochdruckseite (1a) verbunden ist, und wobei zwischen der Gleitfläche (9) des abzudichtenden Körpers und den Dichtscheiben (2) jeweils ein zweiter Ringspalt (RS2) gebildet ist, dessen verschleissbedingte Vergrösserung im Wesentlichen durch die radiale Breite des ersten Ringspalts (RS1) begrenzt wird.

2. Drosselanordnung (1) nach Anspruch 1, wobei die radiale Breite des ersten Ringspalts (RS1) jeweils 1 mm nicht übersteigt.

3. Drosselanordnung (1) nach Anspruch 1 oder 2, wobei sich die Gasdurchlassöffnungen (7) über die gesamte axiale Höhe (H₄) des ersten Schenkels (4) erstrecken.

4. Drosselanordnung (1) nach einem der vorhergehenden Ansprüche, wobei die Gasdurchlassöffnungen (7) in Umfangsrichtung (U) des ersten Schenkels (4) gleichmässig verteilt angeordnet sind.

5. Drosselanordnung (1) nach einem der vorhergehenden Ansprüche, wobei das Verhältnis zwischen der Summe der Flächen der Gasdurchlassöffnungen (7) und der Begrenzungsfläche (8) einschliesslich der Flächen der Gasdurchlassöffnungen (7) zwischen 1:2 und 1:4, bevorzugt zwischen 1:2,8 und 1:3 beträgt.

6. Drosselanordnung (1) nach einem der vorhergehenden Ansprüche, wobei der erste Schenkel (4) acht Gasdurchlassöffnungen (7) aufweist.

7. Drosselanordnung (1) nach einem der vorhergehenden Ansprüche, wobei die Dichtscheibenhalterung (3) einstückig ausgebildet ist und vorzugsweise aus einem Werkstoff mit guten Notlaufeigenschaften im trockenlaufenden Betrieb der Drosselanordnung (1) gefertigt ist, insbesondere ist die Dichtscheibenhalterung im Wesentlichen aus reinem oder gefüllten Hochtemperaturpolymer, reinem oder gefülltem Faserverbundmaterial oder aus Metall gefertigt.

8. Drosselanordnung (1) nach einem der vorhergehenden Ansprüche, wobei die Anzahl der Dichtscheiben (2) wenigstens drei, vorzugsweise genau fünf, beträgt.

9. Drosselanordnung (1) nach einem der vorhergehenden Ansprüche, wobei die Dichtscheiben (2) einstückig und endlos ausgebildet sind.

10. Drosselanordnung (1) nach einem der vorhergehenden Ansprüche, wobei die axiale Höhe (H₂) der Dichtscheiben (2) zwischen 1 mm und 5 mm, bevorzugt zwischen 2,4 mm und 2,6 mm beträgt.

11. Drosselanordnung (1) nach einem der vorhergehenden Ansprüche, wobei die Dichtscheiben (2) aus unterschiedlichen Materialien gefertigt sind, wobei der Elastizitätsmodul des für die Dichtscheiben (2) verwendeten Materials bevorzugt in Richtung der Niederdruckseite (1b) zunimmt.

12. Drosselanordnung (1) nach einem der vorhergehenden Ansprüche, wobei zumindest eine der Dichtscheiben (2), bevorzugt alle Dichtscheiben (2) in der Dichtscheibenhalterung (3), eine von den übrigen Dichtscheiben (2) verschiedene axiale Höhe (H₂) aufweist.

13. Drosselanordnung (1) nach Anspruch 12, wobei die axiale Höhe (H₂) der Dichtscheiben (2) in Richtung der Niederdruckseite (1b) zunimmt.

14. Kolbenkompressor (20), insbesondere trockenlaufender Kolbenkompressor (20), mit zumindest einer Drosselanordnung (1) nach einem der Ansprüche 1 bis 13.

15. Verwendung einer Drosselanordnung (1) nach einem der Ansprüche 1 bis 13, zur Abdichtung einer Kolbenstange (21) oder eines Kolbens (28), insbesondere gegenüber der dynamischen Druckdifferenz, insbesondere in einem Kolbenkompressor (20) nach Anspruch 14.

## Claims

1. Choke arrangement (1) for sealing a sliding surface (9) of a body movable in an axial direction (A), in particular a piston rod (21) or a piston (28), of a piston compressor (20), the choke arrangement (1) having in use a high-pressure side (1a) on the compression chamber side and a low-pressure side (1b) on the crank drive side, the choke arrangement (1) comprising a plurality of annular sealing discs (2) and a sealing disc holder (3), wherein the sealing disc holder (3) has an L-shaped radial section, with a first leg (4) extending in the axial direction (A) and a second leg (5) extending transversely to the axial direction (A), which legs (4, 5) together form the L-shaped radial section, the second leg (5) being of annular design and having a bearing surface (6) pointing in the direction of the high-pressure side (1a), on which bearing surface (6) the sealing discs (2) are arranged stacked one on top of the other in the axial direction (A), the first leg (4) being cylindrical and extending along the outer or inner circumference of the second leg (5) from the bearing surface (6) in the direction of the high-pressure side (1a), the axial height of the first leg (H₄) being selected in such a manner that the sealing discs (2) stacked on the bearing surface (6) have axial play in use, the first leg (4) having a plurality of gas passage openings (7), the first leg (4) having a boundary surface (8) pointing in the direction of the sealing discs (2), wherein, when the sealing discs (2) are aligned coaxially with the first leg (4) and the body to be sealed, a first annular gap (RS1) is formed in each case between the boundary surface (8) and the sealing discs (2), which annular gap is fluidically connected to the high-pressure side (1a) by the gas passage openings (7), and wherein a second annular gap (RS2) is formed between the sliding surface (9) of the body to be sealed and the sealing discs (2) in each case, the wear-related enlargement of which is essentially limited by the radial width of the first annular gap (RS1).

2. Choke arrangement (1) according to claim 1, wherein the radial width of the first annular gap (RS1) does not exceed 1 mm in each case.

3. Choke arrangement (1) according to claim 1 or 2, wherein the gas passage openings (7) extend over the entire axial height (H₄) of the first leg (4).

4. Choke arrangement (1) according to one of the preceding claims, wherein the gas passage openings (7) are arranged uniformly distributed in the circumferential direction (U) of the first leg (4).

5. Choke arrangement (1) according to any one of the preceding claims, wherein the ratio between the sum of the areas of the gas passage openings (7) and the boundary surface (8) including the areas of the gas passage openings (7) is between 1:2 and 1:4, preferably between 1:2.8 and 1:3.

6. Choke arrangement (1) according to any one of the preceding claims, wherein the first leg (4) comprises eight gas passage openings (7).

7. Choke arrangement (1) according to one of the preceding claims, wherein the sealing disc holder (3) is formed in one piece and is preferably made of a material with good emergency running properties in dry-running operation of the choke arrangement (1), in particular the sealing disc holder is made essentially of pure or filled high-temperature polymer, pure or filled fiber composite material or of metal.

8. Choke arrangement (1) according to any one of the preceding claims, wherein the number of sealing discs (2) is at least three, preferably exactly five.

9. Choke arrangement (1) according to any one of the preceding claims, wherein the sealing discs (2) are formed as one piece and endlessly.

10. Choke arrangement (1) according to any one of the preceding claims, wherein the axial height (H₂) of the sealing discs (2) is between 1 mm and 5 mm, preferably between 2.4 mm and 2.6 mm.

11. Choke arrangement (1) according to any one of the preceding claims, wherein the sealing discs (2) are made of different materials, the modulus of elasticity of the material used for the sealing discs (2) preferably increasing in the direction of the low-pressure side (1b).

12. Choke arrangement (1) according to one of the preceding claims, wherein at least one of the sealing discs (2), preferably all sealing discs (2) in the sealing disc holder (3), has an axial height (H₂) different from the other sealing discs (2).

13. Choke arrangement (1) according to claim 12, wherein the axial height (H₂) of the sealing discs (2) increases in the direction of the low-pressure side (1b).

14. Piston compressor (20), in particular dry-running piston compressor (20), having at least one choke arrangement (1) according to any one of claims 1 to 13.

15. Use of a choke arrangement (1) according to any one of claims 1 to 13, for sealing a piston rod (21) or a piston (28), in particular with respect to the dynamic pressure difference, in particular in a piston compressor (20) according to claim 14.

## Revendications

1. Agencement d'étranglement (1) pour rendre étanche une surface de glissement (9) d'un corps mobile dans une direction axiale (A), en particulier d'une tige de piston (21) ou d'un piston (28), d'un compresseur à piston (20), le agencement d'étranglement (1) présentant en utilisation un côté haute pression (1a) côté chambre de compression ainsi qu'un côté basse pression (1b) côté entraînement par manivelle, le agencement d'étranglement (1) comprenant une pluralité de disques d'étanchéité (2) en forme d'anneau circulaire ainsi qu'un support de disque d'étanchéité (3), le support de disque d'étanchéité (3) présentant une coupe radiale en forme de L, avec une première branche (4) s'étendant dans la direction axiale (A) ainsi qu'une deuxième branche (5) s'étendant transversalement à la direction axiale (A), lesquelles branches (4, 5) forment ensemble la coupe radiale en forme de L, la deuxième branche (5) étant réalisée en forme d'anneau circulaire et présentant une surface d'appui (6) orientée en direction du côté haute pression (1a), surface d'appui (6) sur laquelle les disques d'étanchéité (2) sont disposés empilés les uns sur les autres dans la direction axiale (A), la première branche (4) étant de forme cylindrique et s'étendant le long de la périphérie extérieure ou intérieure de la deuxième branche (5) depuis la surface d'appui (6) en direction du côté haute pression (1a), la hauteur axiale de la première branche (H₄) étant choisie de telle sorte, que les disques d'étanchéité (2) empilés sur la surface d'appui (6) présentent en utilisation un jeu axial, la première branche (4) présentant une pluralité d'ouvertures de passage de gaz (7), la première branche (4) présentant une surface de délimitation (8) orientée en direction des disques d'étanchéité (2), dans lequel, lorsque les disques d'étanchéité (2) sont alignés coaxialement avec la première branche (4) et le corps à rendre étanche, il est formé entre la surface de délimitation (8) et les disques d'étanchéité (2) respectivement une première fente annulaire (RS1) qui est reliée fluidiquement au côté haute pression (1a) par les ouvertures de passage de gaz (7), et une deuxième fente annulaire (RS2) étant formé entre la surface de glissement (9) du corps à étancher et les disques d'étanchéité (2), dont l'agrandissement dû à l'usure est essentiellement limité par la largeur radiale de la première fente annulaire (RS1).

2. Agencement d'étranglement (1) selon la revendication 1, dans lequel la largeur radiale de la première fente annulaire (RS1) ne dépasse pas 1 mm dans chaque cas.

3. Agencement d'étranglement (1) selon la revendication 1 ou 2, dans lequel les ouvertures de passage de gaz (7) s'étendent sur toute la hauteur axiale (H₄) de la première branche (4).

4. Agencement d'étranglement (1) selon l'une des revendications précédentes, dans lequel les ouvertures de passage de gaz (7) sont répartis de manière homogène dans la direction circonférentielle (U) de la première branche (4).

5. Agencement d'étranglement (1) selon l'une des revendications précédentes, dans lequel le rapport entre la somme des surfaces des ouvertures de passage de gaz (7) et la surface de délimitation (8), y compris les surfaces des ouvertures de passage de gaz (7), est compris entre 1:2 et 1:4, de préférence entre 1:2,8 et 1:3.

6. Agencement d'étranglement (1) selon l'une des revendications précédentes, dans lequel la première branche (4) comporte huit ouvertures (7) de passage de gaz.

7. Agencement d'étranglement (1) selon l'une des revendications précédentes, dans lequel le support de disque d'étanchéité (3) est formé d'une seule pièce et est de préférence fabriqué dans un matériau présentant de bonnes propriétés de fonctionnement de secours en fonctionnement à sec de l'ensemble d'étranglement (1), en particulier le support de disque d'étanchéité est essentiellement fabriqué en polymère haute température pur ou chargé, en matériau composite fibreux pur ou chargé ou en métal.

8. Agencement d'étranglement (1) selon l'une des revendications précédentes, dans lequel le nombre de disques d'étanchéité (2) est d'au moins trois, de préférence exactement cinq.

9. Agencement d'étranglement (1) selon l'une des revendications précédentes, dans lequel les disques d'étanchéité (2) sont formées d'une seule pièce et sans fin.

10. Agencement d'étranglement (1) selon l'une des revendications précédentes, dans lequel la hauteur axiale (H₂) des disques d'étanchéité (2) est comprise entre 1 mm et 5 mm, de préférence entre 2,4 mm et 2,6 mm.

11. Agencement d'étranglement (1) selon l'une des revendications précédentes, dans lequel les disques d'étanchéité (2) sont fabriquées dans différents matériaux, le module d'élasticité du matériau utilisé pour les disques d'étanchéité (2) augmentant de préférence en direction du côté basse pression (1b).

12. Agencement d'étranglement (1) selon l'une des revendications précédentes, dans lequel au moins l'un des disques d'étanchéité (2), de préférence tous les disques d'étanchéité (2) dans le support de disque d'étanchéité (3), présente une hauteur axiale (H₂) différente des autres disques d'étanchéité (2).

13. Agencement d'étranglement (1) selon la revendication 12, dans lequel la hauteur axiale (H₂) des disques d'étanchéité (2) augmente en direction du côté basse pression (1b).

14. Compresseur à piston (20), en particulier compresseur à piston (20) fonctionnant à sec, avec au moins un agencement d'étranglement (1) selon l'une des revendications 1 à 13.

15. Utilisation d'un agencement d'étranglement (1) selon l'une des revendications 1 à 13, pour assurer l'étanchéité d'une tige (21) ou d'un piston (28), en particulier vis-à-vis de la différence de pression dynamique, en particulier dans un compresseur à piston (20) selon la revendication 14.
